# EUROPÄISCHE PATENTSCHRIFT

(11) **EP 4 237 710 B1**
(45) Veröffentlichungstag und Bekanntmachung des Hinweises auf die Patenterteilung: **22.04.2026**
(21) Anmeldenummer: 21815105.8
(22) Anmeldetag: 18.10.2021
(51) Int. Cl.: F16J 15/3232, F16J 15/324, F16J 15/3248, F16J 15/3276

(54) **WELLENDICHTRING MIT LIPPEN, GETRIEBE MIT WELLENDICHTRING UND VERFAHREN ZUR SCHMIERUNG EINES WELLENDICHTRINGS**
SHAFT SEALING RING HAVING LIPS, GEARBOX HAVING A SHAFT SEALING RING, AND METHOD FOR LUBRICATING A SHAFT SEALING RING
BAGUE D'ÉTANCHÉITÉ D'ARBRE POURVUE DE LÈVRES, BOÎTE DE VITESSES COMPORTANT UNE BAGUE D'ÉTANCHÉITÉ D'ARBRE ET PROCÉDÉ DE LUBRIFICATION D'UNE BAGUE D'ÉTANCHÉITÉ D'ARBRE

(30) Priorität: 29.10.2020 DE 102020006665
(43) Veröffentlichungstag der Anmeldung: 06.09.2023
(73) Patentinhaber: SEW-EURODRIVE GmbH & Co. KG, 76646 Bruchsal (DE); Carl Freudenberg KG, 69469 Weinheim (DE)
(72) Erfinder: GANTNER, Martin, 68753 Waghäusel-Kirrlach (DE); PREM, Erich, 69502 Hemsbach (DE)
(86) Internationale Anmeldenummer: PCT/EP2021/025409
(87) Internationale Veröffentlichungsnummer: WO 2022/089777

(56) Entgegenhaltungen:
- EP-A1- 3 546 776
- CN-A- 106 989 178
- JP-A- 2015 124 785
- JP-A- H05 293 513
- JP-A- S63 154 207
- US-A1- 2015 086 448

## Beschreibung

Die Erfindung betrifft **ein System, aufweisend einen Wellendichtring und eine Anordnung zur Schmierstoffaufbringung auf eine Lippe aufweisenden Wellendichtring mit einem Dorn,** ein Getriebe mit Wellendichtring und ein Verfahren zur Schmierung eines Wellendichtrings.

Es ist allgemein bekannt, dass ein Wellendichtring zur Abdichtung eines ölbefüllten Innenraumbereichs eines Getriebes verwendet wird.

**Aus der** DE 10 2009 050 215 A1 **ist ein nichtschleifender Dichtungsring bekannt.**

**Aus der** WO 2009/103314 A1 **ist eine Dichtungsanordnung bekannt.**

**Aus der** EP 3 546 776 A1 **ist ein Wellendichtring bekannt.**

**Aus der** JP 2015 124785 A **ist eine Schmiervorrichtung für einen Wellendichtring bekannt.**

**Aus der** CN 106 989 178 A **ist ein Wellendichtring bekannt.**

**Aus der** US 2015/086448 A1 **ist eine Messvorrichtung für Flüssigkeiten bekannt.**

**Aus der** JP H05 293513 A **ist als nächstliegender Stand der Technik eine Anordnung** zur Schmierstoffaufbringung bekannt, gemäß der Präambel von Anspruch 1.

Aus **der** JP S63 154207 A **ist eine Anordnung zur Schmierstoffaufbringung bekannt.**

Der Erfindung liegt daher die Aufgabe zugrunde, **ein System, aufweisend einen Wellendichtring und eine Anordnung zur Schmierstoffaufbringung auf eine Lippe aufweisenden Wellendichtring** weiterzubilden, wobei der Umweltschutz, insbesondere die Sicherheit für die Umwelt gegen deren Verschmutzung, verbessert sein soll.

Erfindungsgemäß wird die Aufgabe bei **dem System** nach den in Anspruch 1, bei dem Getriebe nach den in Anspruch **10** und bei dem Verfahren nach den in Anspruch **11** angegebenen Merkmalen gelöst.

Von Vorteil ist dabei, dass durch das gezielte Aufbringen von Fettpunkten eine möglichst geringe Menge an Fett zum Schmieren notwendig ist. Somit ist auch die Menge an Fett, die bei Leckage in die Umgebung, also Umwelt, austreten kann, reduziert. Denn es wird eine möglichst geringe Menge an Schmiermittel verwendet.

Bei einer vorteilhaften Ausgestaltung umfasst, der von der ersten Lippe überdeckte, axiale Bereich den von den ersten Fettpunkten überdeckten axialen Bereich oder überlappt zumindest mit ihm, wobei der von der zweiten Lippe überdeckte axiale Bereich, den von den zweiten Fettpunkten überdeckten, axialen Bereich umfasst oder zumindest mit ihm überlappt. Von Vorteil ist dabei, dass an jeder Lippe direkt Fett aufgebracht wird. Somit ist eine Versorgung mit einer möglichst geringen Menge an Fett erreichbar. Im Betrieb, also bei in den Wellendichtring eingesteckter Welle, verschmieren die Fettpunkte sich ineinander, da jeder Fettpunkt in Umfangsrichtung beziehungsweise entgegen der Umfangsrichtung verschmiert wird, insbesondere abhängig von der Drehrichtung der Welle.

**Erfindungsgemäß** sind die ersten Fettpunkte axial, insbesondere in axialer Richtung, beabstandet von den zweiten Fettpunkten. Von Vorteil ist dabei, dass nicht der gesamte Raumbereich mit Fett befüllt werden muss und somit eine Schmierung mit geringer Fettmenge gewährleistbar ist.

Bei einer vorteilhaften Ausgestaltung ist die jeweilige Fettmenge der ersten Fettpunkte größer als die jeweilige Fettmenge der zweiten Fettpunkte. Von Vorteil ist dabei, dass die Dichtlippe mit einer größeren Fettmenge versorgbar ist als die Staublippe.

Bei einer vorteilhaften Ausgestaltung sind die ersten Fettpunkte in Umfangsrichtung voneinander vorzugsweise gleichmäßig beabstandet,
und/oder die zweiten Fettpunkte sind in Umfangsrichtung voneinander vorzugsweise gleichmäßig beabstandet. Von Vorteil ist dabei, dass zwischen den beiden durch die Fettpunkte gebildeten Reihen ein Versatz ermöglicht ist, so dass der Abstand zwischen den ersten und zweiten Fettpunkten möglichst groß ist und somit ein Verschmieren in axialer Richtung vermieden wird.

Bei einer vorteilhaften Ausgestaltung gleicht die Anzahl N der ersten Fettpunkte der Anzahl N der zweiten Fettpunkte. Von Vorteil ist dabei, dass ein Versatz zwischen den Reihen erreichbar ist. Denn bei ungleicher, insbesondere teilerfremder, Anzahl ist ein Versatz in Umfangsrichtung nicht gleichmäßig ermöglicht.

Bei einer vorteilhaften Ausgestaltung ist der jeweilige Schwerpunkt des jeweiligen ersten Fettpunkts an einer ersten axialen Position angeordnet und der jeweilige Schwerpunkt des jeweiligen zweiten Fettpunkts an einer zweiten axialen Position, die von der ersten axialen Position beabstandet ist. Von Vorteil ist dabei, dass ein Verschmieren der ersten Fettpunkte mit den zweiten Fettpunkten verhinderbar ist.

Bei einer vorteilhaften Ausgestaltung ist die erste Lippe eine Dichtlippe,
und/oder die zweite Lippe ist eine Staublippe, Schmutzlippe oder Dichtlippe. Von Vorteil ist dabei, dass eine Schmierung der Lippen mit einer geringen Menge an Schmierfett ermöglicht ist.

Bei einer vorteilhaften Ausgestaltung weist die Anordnung der ersten Fettpunkte, insbesondere also die durch die ersten Fettpunkte gebildete Reihe, einen Versatz in Umfangsrichtung zu der Anordnung der zweiten Fettpunkte, insbesondere also die durch die zweiten Fettpunkte gebildete Reihe auf,
insbesondere wobei der Versatz 180° / N beträgt, wobei N die Anzahl der ersten Fettpunkte ist. Von Vorteil ist dabei, dass der Abstand zwischen den ersten und zweiten Fettpunkten möglichst groß gewählt ist und somit ein Verschmieren mit möglichst großer Wahrscheinlichkeit verhindert ist. Somit ist die bei der jeweiligen Lippe aufgebrachte Schmiermenge auch nur dort verfügbar.

Wichtige Merkmale bei dem Getriebe mit Wellendichtring sind, dass das Getriebe ein Gehäuseteil aufweist, in welchem der Wellendichtring aufgenommen ist,
wobei eine Welle durch den Wellendichtring hindurchragt,
wobei die erste Lippe des Wellendichtrings zur Welle hin abdichtet, insbesondere wobei die erste Lippe als Dichtlippe fungiert,
wobei an der vom Raumbereich abgewandten Seite der ersten Lippe Öl vorgesehen ist,
insbesondere wobei an der dem Raumbereich zugewandten Seite der ersten Lippe die ersten Fettpunkte aufgebracht sind,
insbesondere wobei die zweite Lippe des Wellendichtrings zur Welle hin als Staublippe und/oder Schmutzlippe, wobei an der dem Raumbereich zugewandten Seite der zweiten Lippe die zweiten Fettpunkte aufgebracht sind.

Von Vorteil ist dabei, dass die Lippe an seiner ersten Seite mit Öl geschmiert ist und an seiner anderen Seite mit Fett. Dabei ist die eingesetzte Fettmenge gering und somit auch bei Leckage eine größtmögliche Sicherheit für die Umwelt gewährleistet.

Wichtige Merkmale bei dem Verfahren zur Schmierung eines Wellendichtrings sind, dass insbesondere mittels eines Dorns,
in einem ersten Verfahrensschritt der Lippen aufweisende Wellendichtring auf einen Dorn aufgeschoben wird,
wobei der Dorn erste und zweite Ausnehmungen aufweist, wobei die ersten von den zweiten Ausnehmungen axial beabstandet sind,
wobei die ersten Ausnehmungen in Umfangsrichtung voneinander insbesondere gleichmäßig beabstandet sind und wobei die zweiten Ausnehmungen in Umfangsrichtung voneinander insbesondere gleichmäßig beabstandet sind,
in einem zweiten Verfahrensschritt Fett durch die ersten und zweiten Ausnehmungen herausgepresst wird, so dass auf einer ersten Seite einer ersten Lippe erste Fettpunkte aufgebracht werden und auf einer zweiten Seite einer zweiten Lippe zweite Fettpunkte aufgebracht werden,
wobei die erste Seite einem ringförmigen Raumbereich zugewandt ist, welcher von dem Wellendichtring und einem gedachten Zylinder, dessen Außenradius dem Innenradius des Wellendichtrings gleicht, begrenzt ist,
insbesondere in einem dritten Verfahrensschritt der Wellendichtring vom Dorn entfernt wird
insbesondere wobei danach der Wellendichtring in einem Gehäuseteil eines Getriebes aufgenommen wird,
insbesondere wobei in einem vierten Verfahrensschritt der Wellendichtring auf eine Welle aufgesteckt wird, deren Außendurchmesser, in dem von den Lippen überdeckten, axialen Bereich dem Außendurchmesser des Zylinders gleicht, oder diese Welle durch den Wellendichtring durchgesteckt wird.

Von Vorteil ist dabei, dass in sehr kurzer Zeit das Aufbringen von Schmierstoff ermöglicht ist, wobei die Schmierstoffmenge sehr exakt dosierbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

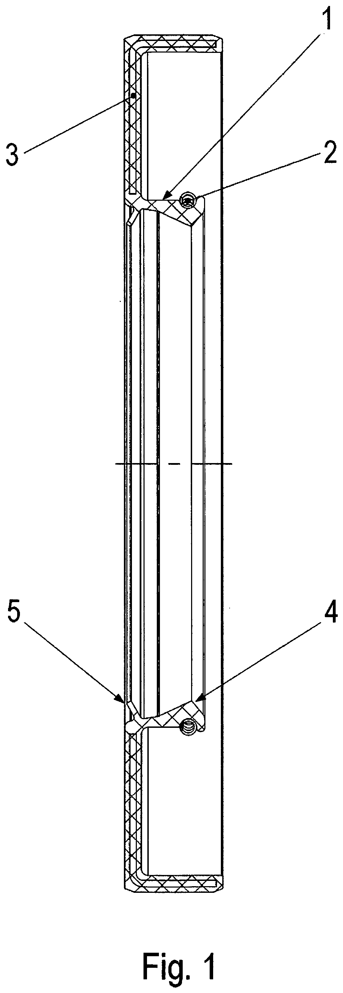

In der Figur 1 ist ein Querschnitt durch einen erfindungsgemäßen Wellendichtring dargestellt, der zum Abdichten einer drehbar gelagerten Welle in einem Gehäuseteil eines Getriebes aufgenommen ist.
In der Figur 2 ist eine Draufsicht auf eine Anordnung zur Schmierstoffaufbringung auf den angeschnitten dargestellten Wellendichtring bei eingestecktem Dorn 20 dargestellt.
In der Figur 3 ist der Querschnitt durch den Wellendichtring nach der Schmierstoffaufbringung dargestellt.

Wie in den Figuren dargestellt, weist der Wellendichtring 3 einen metallischen Stützring 3 auf, welcher in einem aus Kunststoff gefertigten Basisring 1 umspritzt angeordnet ist.

Somit ist der Wellendichtring 3 durch einen einfachen Arbeitsgang, in welchem der Stützring 3 mit Kunststoff umspritzt wird, herstellbar. Der Stützring 3 ist vorzugsweise mit einem L-förmigen Querschnitt ausgeführt, wobei ein erster Schenkel des L in axialer und der zweite in radialer Richtung ausgerichtet ist.

Der Basisring ist als Rotationskörper ausgeführt, der einen U-förmigen Querschnitt aufweist.

Der radial innere Schenkel der in axialer Richtung geöffneten U-Form bildet einen ringförmigen Schenkelbereich 1 des Rotationskörpers, also des Basisrings.

An diesem Schenkelbereich 1 ist eine nach radial innen zu der abzudichtenden Welle hin hervorragende Dichtlippe 4 ausgeformt.

Eine am radial äußeren Umfang des Schenkelbereichs angeordnete Ringfeder 2 drückt, insbesondere schrumpft, die Dichtlippe 4 auf die Welle.

Der von der Ringfeder 2 überdeckte axiale Bereich umfasst den von der Dichtlippe 4 überdeckten axialen Bereich oder überlappt mit diesem.

Axial beabstandet von der Dichtlippe 4 ist am Schenkelbereich 1 eine nach radial innen zur abzudichtenden Welle hin hervorragende Staublippe 5 ausgeformt.

Der Innenraum des Getriebes ist zumindest teilweise mit Öl befüllt. Der Wellendichtring ist in einem Gehäuseteil des Getriebes aufgenommen.

Somit liegt an der dem Innenraum des Getriebes zugewandten Seite der Dichtlippe 4 Öl an.

Zur weiteren Schmierung des Wellendichtrings wird in dem ringförmigen Raumberiech zwischen Staublippe 5 und Dichtlippe 4 Fett eingebracht.

Erfindungsgemäß werden hierzu an der dem ringförmigen Raumbereich zugewandten Seite der Staublippe 5 in Umfangsrichtung voneinander beabstandete zweite Fettpunkte 32 aufgebracht und axial von den zweiten Fettpunkten 32 beabstandet werden an der dem ringförmigen Raumbereich zugewandten Seite der Dichtlippe 4 erste, in Umfangsrichtung voneinander beabstandete Fettpunkte 31 aufgebracht.

Vorzugsweise sind die ersten Fettpunkte 31 voneinander in Umfangsrichtung regelmäßig beabstandet. Ebenso sind die zweiten Fettpunkte 32 voneinander in Umfangsrichtung regelmäßig beabstandet.

Vorzugsweise gleicht die Anzahl der ersten Fettpunkte 31 der Anzahl der zweiten Fettpunkte 32.

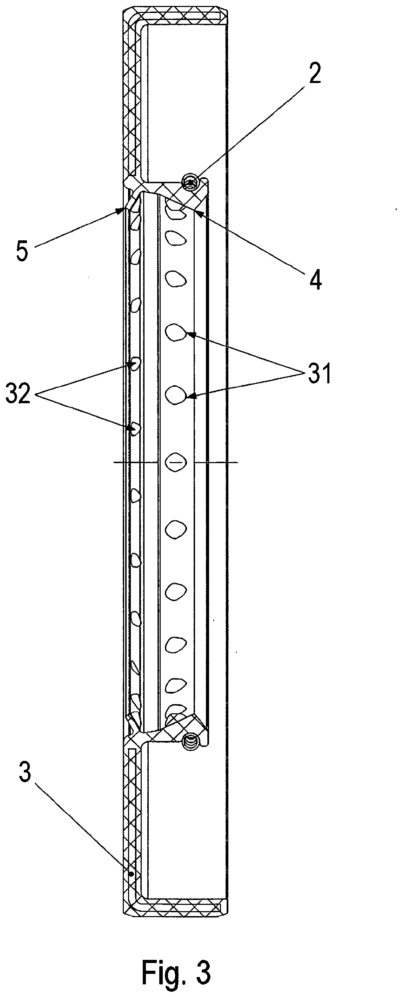

Wie in Figur 3 gezeigt, ist weiter vorzugsweise aber ein Versatz in Umfangsrichtung zwischen der durch die ersten Fettpunkte 31 und der durch die zweiten Fettpunkte 32 gebildeten Fettpunktreihe vorgesehen.

Die in einem ersten Fettpunkt 31 jeweils enthaltene Fettmenge ist größer als die in einem zweiten Fettpunkt 32 enthaltene Fettmenge.

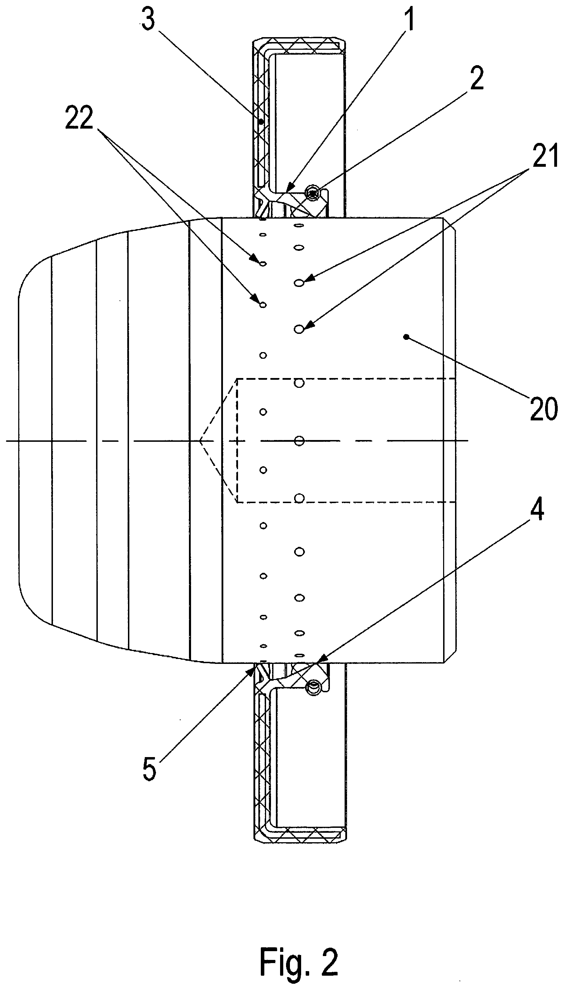

Wie in Figur 2 gezeigt, wird zum Aufbringen der Festpunkte (31, 32) der Wellendichtring auf einen Dorn 20 aufgeschoben und Fett durch erste Ausnehmungen 21 des Dorns zum Aufbringen der ersten Fettpunkte 31 gedrückt und durch zweite Ausnehmungen 22 des Dorns zum Aufbringen der zweiten Fettpunkte 32.

Die axiale Richtung ist parallel zur Drehrichtung der durch den Wellendichtring hindurchragenden Welle ausgerichtet. Ebenso ist die Umfangsrichtung auf diese Welle bezogen und die radiale Richtung.

Bei weiteren erfindungsgemäßen Ausführungsbeispielen weist der Wellendichtring eine von der Dichtlippe axial beabstandete zweite Dichtlippe auf, wobei eine dritte Reihe von Fettpunkten im Bereich der zweiten Dichtlippe aufgebracht wird. Vorzugsweise wird eine jeweilige Reihe von fettpunkten an jeder dem ringförmigen Raumbereich zugewandten Seite einer jeweiligen Lippe, insbesondere Staublippe, Schutzlippe oder Fettlippe aufgebracht. Wenn also eine Lippe axial beidseitig von einem nicht von Öl befüllten Raumbereich umgeben ist, wird sogar beidseitig Fett aufgebracht.

Bei weiteren erfindungsgemäßen Ausführungsbeispielen sind die ersten Ausnehmungen 21 in Umfangsrichtung weiter ausgedehnt als in axialer Richtung. Somit sind die ersten Fettpunkte 31 ebenfalls in Umfangsrichtung weiter ausgedehnt in axialer Richtung. Besonders vorteilhaft ist dies in demjenigen Fall, dass die ersten Fettpunkte 31 an einer Dichtlippe aufgebracht sind, da dort etwas größere Fettmengen, also fettpunkte 31, benötigt werden, also

Alternativ oder zusätzlich sind die zweiten Ausnehmungen 22 in Umfangsrichtung weiter ausgedehnt als in axialer Richtung. Somit sind die zweiten Fettpunkte 32 ebenfalls in Umfangsrichtung weiter ausgedehnt als in axialer Richtung.

### Bezugszeichenliste

1 Schenkelbereich des Basisrings, insbesondere Membran
2 Ringfeder
3 Stützring
4 Dichtlippe
5 Staublippe
20 Dorn
21 erste Ausnehmungen
22 zweite Ausnehmungen
31 erste Fettpunkte
32 zweite Fettpunkte

## Patentansprüche

1. **System, aufweisend einen Wellendichtring und eine Anordnung zur Schmierstoffaufbringung auf den Lippen aufweisenden Wellendichtring mit einem Dorn (20),**
wobei axial, insbesondere in axialer Richtung, zwischen einer ersten Lippe und einer zweiten Lippe ein ringförmiger Raumbereich ausgebildet ist,
insbesondere wobei die axiale Richtung parallel zur Richtung der Ringachse des Wellendichtrings ausgerichtet ist,
wobei der Raumbereich durch den Wellendichtring und einen gedachten, den Innendurchmesser des Wellendichtrings als Außendurchmesser aufweisenden Zylinder begrenzt ist,
**dadurch gekennzeichnet, dass**
**der Dorn (20) erste und zweite Ausnehmungen (21, 22) aufweist, wobei die ersten von den zweiten Ausnehmungen (22) axial beabstandet sind,**
**wobei** an der dem Raumbereich zugewandten Seite der ersten Lippe erste, **aus den ersten Ausnehmungen (21) herausgepresste** Fettpunkte (31) aufgebracht sind,
und **wobei** an der dem Raumbereich zugewandten Seite der zweiten Lippe zweite, **aus den zweiten Ausnehmungen (22) herausgepresste** Fettpunkte (32) aufgebracht sind,
**wobei die ersten Fettpunkte (31) axial, also in axialer Richtung, beabstandet sind von den zweiten Fettpunkten (32).**

2. **System** nach **Anspruch 1,**
**dadurch gekennzeichnet, dass**
der von der ersten Lippe überdeckte axiale Bereich den von den ersten Fettpunkten (31, 32) überdeckten axialen Bereich umfasst oder zumindest mit ihm überlappt,
wobei der von der zweiten Lippe überdeckte axiale Bereich den von den zweiten Fettpunkten (32) überdeckten axialen Bereich umfasst oder zumindest mit ihm überlappt.

3. **System** nach einem der vorangegangenen Ansprüche,
**dadurch gekennzeichnet, dass**
die jeweilige Fettmenge der ersten Fettpunkte (31) größer ist als die jeweilige Fettmenge der zweiten Fettpunkte (32).

4. **System** nach einem der vorangegangenen Ansprüche,
**dadurch gekennzeichnet, dass**
die ersten Fettpunkte (31) in Umfangsrichtung voneinander vorzugsweise gleichmäßig beabstandet sind,
und/oder dass die zweiten Fettpunkte (32) in Umfangsrichtung voneinander vorzugsweise gleichmäßig beabstandet sind.

5. **System** nach einem der vorangegangenen Ansprüche,
**dadurch gekennzeichnet, dass**
die Anzahl N der ersten Fettpunkte (31) der Anzahl N der zweiten Fettpunkte (32) gleicht.

6. **System** nach einem der vorangegangenen Ansprüche,
**dadurch gekennzeichnet, dass**
der jeweilige Schwerpunkt des jeweiligen ersten Fettpunkts an einer ersten axialen Position angeordnet ist
und dass
der jeweilige Schwerpunkt des jeweiligen zweiten Fettpunkts an einer zweiten axialen Position angeordnet ist, die von der ersten axialen Position beabstandet ist.

7. **System** nach einem der vorangegangenen Ansprüche,
**dadurch gekennzeichnet, dass**
die erste Lippe eine Dichtlippe (4) ist,
und/oder dass die zweite Lippe eine Staublippe (5), Schmutzlippe oder Dichtlippe (4) ist.

8. **System** nach einem der vorangegangenen Ansprüche,
**dadurch gekennzeichnet, dass**
die Anordnung der ersten Fettpunkte (31), insbesondere also die durch die ersten Fettpunkte (31) gebildete Reihe, einen Versatz in Umfangsrichtung zu der Anordnung der zweiten Fettpunkte (32), insbesondere also die durch die zweiten Fettpunkte (32) gebildete Reihe aufweist,
insbesondere wobei der Versatz 180° / N beträgt, wobei N die Anzahl der ersten Fettpunkte (31) ist.

9. **System** nach einem der vorangegangenen Ansprüche,
**dadurch gekennzeichnet, dass**
die ersten und/oder zweiten Fettpunkte (31, 32) in Umfangsrichtung sich mehr erstrecken als in axialer Richtung.

10. Getriebe mit **System** nach einem der vorangegangenen Ansprüche,
**dadurch gekennzeichnet, dass**
das Getriebe ein Gehäuseteil aufweist, in welchem der Wellendichtring aufgenommen ist,
wobei eine Welle durch den Wellendichtring hindurchragt,
wobei die erste Lippe des Wellendichtrings zur Welle hin abdichtet, insbesondere wobei die erste Lippe als Dichtlippe (4) fungiert,
wobei an der vom Raumbereich abgewandten Seite der ersten Lippe Öl vorgesehen ist,
insbesondere wobei an der dem Raumbereich zugewandten Seite der ersten Lippe die ersten Fettpunkte (31) aufgebracht sind,
insbesondere wobei die zweite Lippe des Wellendichtrings zur Welle hin als Staublippe (5) und/oder Schmutzlippe, wobei an der dem Raumbereich zugewandten Seite der zweiten Lippe die zweiten Fettpunkte (32) aufgebracht sind.

11. Verfahren zur Schmierung eines Wellendichtrings, mittels eines Dorns (20),
**dadurch gekennzeichnet, dass**
in einem ersten Verfahrensschritt der Lippen aufweisende Wellendichtring auf **den** Dorn (20) aufgeschoben wird,
wobei der Dorn (20) erste und zweite Ausnehmungen (21, 22) aufweist, wobei die ersten von den zweiten Ausnehmungen (22) axial beabstandet sind,
wobei die ersten Ausnehmungen (21) in Umfangsrichtung voneinander insbesondere gleichmäßig beabstandet sind und wobei die zweiten Ausnehmungen (22) in Umfangsrichtung voneinander insbesondere gleichmäßig beabstandet sind,
in einem zweiten Verfahrensschritt Fett durch die ersten und zweiten Ausnehmungen (21, 22) herausgepresst wird, so dass auf einer ersten Seite einer ersten Lippe erste Fettpunkte (31) aufgebracht werden und auf einer zweiten Seite einer zweiten Lippe zweite Fettpunkte (32) aufgebracht werden,
wobei die erste Seite einem ringförmigen Raumbereich zugewandt ist, welcher von dem Wellendichtring und einem gedachten Zylinder, dessen Außenradius dem Innenradius des Wellendichtrings gleicht, begrenzt ist.

12. Verfahren nach einem der vorangegangenen Ansprüche,
**dadurch gekennzeichnet, dass**
in einem dritten Verfahrensschritt der Wellendichtring vom Dorn (20) entfernt wird
insbesondere wobei danach der Wellendichtring in einem Gehäuseteil eines Getriebes aufgenommen wird.

13. Verfahren nach einem der vorangegangenen Ansprüche,
**dadurch gekennzeichnet, dass**
in einem vierten Verfahrensschritt der Wellendichtring auf eine Welle aufgesteckt wird, deren Außendurchmesser, in dem von den Lippen überdeckten axialen Bereich dem Außendurchmesser des Zylinders gleicht, oder diese Welle durch den Wellendichtring durchgesteckt wird.

14. Verfahren nach einem der vorangegangenen Ansprüche,
**dadurch gekennzeichnet, dass**
die ersten und/oder zweiten Ausnehmungen (21, 22) in Umfangsrichtung weiter ausgedehnt sind als in axialer Richtung,
insbesondere so, dass die ersten und/oder zweiten Fettpunkte (31, 32) in Umfangsrichtung weiter ausgedehnt sind als in axialer Richtung.

## Claims

1. A system, having a shaft sealing ring and an arrangement for applying lubricant to the lipped shaft sealing ring with a mandrel (20),
wherein an annular spatial region is formed axially, in particular in the axial direction, between a first lip and a second lip,
in particular wherein the axial direction is oriented parallel to the direction of the ring axis of the shaft sealing ring,
wherein the spatial region is limited by the shaft sealing ring and a notional cylinder having the internal diameter of the shaft sealing ring as an external diameter,
**characterised in that**
the mandrel (20) has first and second cutouts (21, 22), with the first ones being axially spaced apart from the second cutouts (22),
with first grease dots (31) pressed out of the first cutouts (21) being applied on that side of the first lip which faces the spatial region,
and with second grease dots (32) pressed out of the second cutouts (22) being applied on that side of the second lip which faces the spatial region,
with the first grease dots (31) being spaced apart axially, i.e. in the axial direction, from the second grease dots (32).

2. A system according to claim 1,
**characterised in that**
the axial region covered by the first lip encompasses or at least overlaps with the axial region covered by the first grease dots (31, 32),
with the axial region covered by the second lip encompassing or at least overlapping with the axial region covered by the second grease dots (32).

3. A system according to one of the preceding claims,
**characterised in that**
the respective amount of grease of the first grease dots (31) is greater than the respective amount of grease of the second grease dots (32).

4. A system according to one of the preceding claims,
**characterised in that**
the first grease dots (31) are preferably uniformly spaced apart from each other in the peripheral direction,
and/or **in that** the second grease dots (32) are preferably uniformly spaced apart from each other in the peripheral direction.

5. A system according to one of the preceding claims,
**characterised in that**
the number N of the first grease dots (31) is equal to the number N of the second grease dots (32).

6. A system according to one of the preceding claims,
**characterised in that**
the respective centre of mass of the respective first grease dot is arranged at a first axial position
and **in that**
the respective centre of mass of the respective second grease dot is arranged at a second axial position which is spaced apart from the first axial position.

7. A system according to one of the preceding claims,
**characterised in that**
the first lip is a sealing lip (4),
and/or **in that** the second lip is a dust lip (5), dirt lip or sealing lip (4).

8. A system according to one of the preceding claims, **characterised in that**
the arrangement of the first grease dots (31), in particular therefore the row formed by the first grease dots (31), has an offset in the peripheral direction to the arrangement of the second grease dots (32), in particular therefore the row formed by the second grease dots (32),
in particular with the offset being 180° / N, where N is the number of the first grease dots (31).

9. A system according to one of the preceding claims,
**characterised in that**
the first and/or second grease dots (31, 32) extend more in the peripheral direction than in the axial direction.

10. A gear unit with a system according to one of the preceding claims, **characterised in that**
the gear unit has a housing part in which the shaft sealing ring is received,
with a shaft protruding through the shaft sealing ring,
with the first lip of the shaft sealing ring sealing off towards the shaft, in particular with the first lip acting as a sealing lip (4),
with oil being provided on that side of the first lip which faces away from the spatial region,
in particular with the first grease dots (31) being applied on that side of the first lip which faces the spatial region,
in particular with the second lip of the shaft sealing ring towards the shaft as a dust lip (5) and/or dirt lip, with the second grease dots (32) being applied on that side of the second lip which faces the spatial region.

11. A method for lubricating a shaft sealing ring by means of a mandrel (20), **characterised in that**
in a first method step the lipped shaft sealing ring is pushed onto the mandrel (20),
with the mandrel (20) having first and second cutouts (21, 22), with the first ones being axially spaced apart from the second cutouts (22),
with the first cutouts (21) being in particular uniformly spaced apart from each other in the peripheral direction, and with the second cutouts (22) being in particular uniformly spaced apart from each other in the peripheral direction,
in a second method step grease is pressed out through the first and second cutouts (21, 22), so that first grease dots (31) are applied on a first side of a first lip and second grease dots (32) are applied on a second side of a second lip,
with the first side facing an annular spatial region which is limited by the shaft sealing ring and a notional cylinder, the external radius of which is equal to the internal radius of the shaft sealing ring.

12. A method according to one of the preceding claims,
**characterised in that**
in a third method step the shaft sealing ring is removed from the mandrel (20),
in particular with thereafter the shaft sealing ring being received in a housing part of a gear unit.

13. A method according to one of the preceding claims,
**characterised in that**
in a fourth method step the shaft sealing ring is mounted on a shaft, the external diameter of which, in the axial region covered by the lips, is equal to the external diameter of the cylinder, or this shaft is inserted through the shaft sealing ring.

14. A method according to one of the preceding claims,
**characterised in that**
the first and/or second cutouts (21, 22) are extended further in the peripheral direction than in the axial direction,
in particular such that the first and/or second grease dots (31, 32) are extended further in the peripheral direction than in the axial direction.

## Revendications

1. Système, comprenant une bague d'étanchéité d'arbre et un agencement pour application de lubrifiant sur les lèvres comprenant une bague d'étanchéité d'arbre avec un mandrin (20),
où axial, en particulier dans la direction axiale, entre une première lèvre et une deuxième lèvre une zone annulaire est formée,
en particulier où la direction axiale est alignée parallèlement à la direction de l'axe annulaire de la bague d'étanchéité d'arbre,
où la zone est délimitée par la bague d'étanchéité d'arbre et un cylindre imaginaire ayant le diamètre intérieur de la bague d'étanchéité d'arbre comme diamètre extérieur,
**caractérisé en ce que**
le mandrin (20) comprend des premières et deuxièmes évidements (21, 22), les premiers évidements étant espacés axialement des deuxièmes évidements (22),
où, sur le côté de la première lèvre faisant face à la zone, des premiers points de graisse (31) extrudés à partir des premiers évidements (21) sont appliqués,
et où, sur le côté de la deuxième lèvre faisant face à la zone, des deuxièmes points de graisse (32) extrudés à partir des deuxièmes évidements (22) sont appliqués,
où les premiers points de graisse (31) sont espacés axialement, c'est-à-dire dans la direction axiale, des deuxièmes points de graisse (32).

2. Système selon la revendication 1,
**caractérisé en ce que**
la zone axiale recouverte par la première lèvre comprend ou au moins chevauche la zone axiale recouverte par les premiers points de graisse (31, 32),
où la zone axiale recouverte par la deuxième lèvre comprend ou au moins chevauche la zone axiale recouverte par les deuxièmes points de graisse (32).

3. Système selon l'une des revendications précédentes,
**caractérisé en ce que**
la quantité de graisse respective des premiers points de graisse (31) est supérieure à la quantité de graisse respective des deuxièmes points de graisse (32).

4. Système selon l'une des revendications précédentes,
**caractérisé en ce que**
les premiers points de graisse (31) sont de préférence espacés uniformément les uns des autres en direction circonférentielle,
et/ou que les deuxièmes points de graisse (32) sont de préférence espacés uniformément les uns des autres en direction circonférentielle.

5. Système selon l'une des revendications précédentes,
**caractérisé en ce que**
le nombre N des premiers points de graisse (31) est égal au nombre N des deuxièmes points de graisse (32).

6. Système selon l'une des revendications précédentes,
**caractérisé en ce que**
le centre de gravité respectif de chaque premier point de graisse est disposé à une première position axiale
et que
le centre de gravité respectif de chaque deuxième point de graisse est disposé à une deuxième position axiale, qui est espacée de la première position axiale.

7. Système selon l'une des revendications précédentes,
**caractérisé en ce que**
la première lèvre est une lèvre d'étanchéité (4),
et/ou que la deuxième lèvre est une lèvre anti-poussière (5), lèvre anti-saleté ou lèvre d'étanchéité (4).

8. Système selon l'une des revendications précédentes,
**caractérisé en ce que**
l'agencement des premiers points de graisse (31), en particulier la rangée formée par les premiers points de graisse (31), présente un décalage en direction circonférentielle par rapport à l'agencement des deuxièmes points de graisse (32), en particulier la rangée formée par les deuximes points de graisse (32),
en particulier où le décalage est de 180° / N, N étant le nombre des premiers points de graisse (31).

9. Système selon l'une des revendications précédentes,
**caractérisé en ce que**
les premiers et/ou deuxièmes points de graisse (31, 32) s'étendent davantage en direction circonférentielle qu'en direction axiale.

10. Engrenage avec système selon l'une des revendications précédentes,
**caractérisé en ce que**
l'engrenage comprend un élément de boîtier dans lequel la bague d'étanchéité d'arbre est logée,
où un arbre traverse la bague d'étanchéité d'arbre,
où la première lèvre de la bague d'étanchéité d'arbre étanche vers l'arbre, en particulier où la première lèvre fonctionne comme une lèvre d'étanchéité (4),
où de l'huile est prévue sur le côté de la première lèvre opposé à la zone,
en particulier où les premiers points de graisse (31) sont appliqués sur le côté de la première lèvre faisant face à la zone,
en particulier où la deuxième lèvre de la bague d'étanchéité d'arbre vers l'arbre fonctionne comme une lèvre anti-poussière (5)
et/ou une lèvre anti-saleté, où les deuxièmes points de graisse (32) sont appliqués sur le côté de la deuxième lèvre faisant face à la zone.

11. Procédé pour la lubrification d'une bague d'étanchéité d'arbre, au moyen d'un mandrin (20), **caractérisé en ce que**
dans une première étape de procédé, la bague d'étanchéité d'arbre comprenant des lèvres est enfilée sur le mandrin (20),
où le mandrin (20) comprend des premières et deuxièmes évidements (21, 22), les premiers évidements étant espacés axialement des deuxièmes évidements (22),
où les premiers évidements (21) sont de préférence espacés uniformément les uns des autres en direction circonférentielle et où les deuxièmes évidements (22) sont de préférence espacés uniformément les uns des autres en direction circonférentielle,
dans une deuxième étape de procédé, la graisse est extrudée à travers les premiers et deuxièmes évidements (21, 22), de sorte que sur un premier côté d'une première lèvre des premiers points de graisse (31) sont appliqués et sur un deuxième côté d'une deuxième lèvre des deuxièmes points de graisse (32) sont appliqués,
où le premier côté fait face à une zone annulaire, qui est délimitée par la bague d'étanchéité d'arbre et un cylindre imaginaire dont le rayon extérieur est égal au rayon intérieur de la bague d'étanchéité d'arbre.

12. Procédé selon l'une des revendications précédentes,
**caractérisé en ce que**
dans une troisième étape de procédé, la bague d'étanchéité d'arbre est retirée du mandrin (20),
en particulier où ensuite la bague d'étanchéité d'arbre est logée dans un élément de boîtier d'un engrenage.

13. Procédé selon l'une des revendications précédentes,
**caractérisé en ce que**
dans une quatrième étape de procédé, la bague d'étanchéité d'arbre est emmanchée sur un arbre dont le diamètre extérieur, dans la zone axiale recouverte par les lèvres, est égal au diamètre extérieur du cylindre, ou cet arbre est traversé par la bague d'étanchéité d'arbre.

14. Procédé selon l'une des revendications précédentes,
**caractérisé en ce que**
les premiers et/ou deuxièmes évidements (21, 22) sont étendus davantage en direction circonférentielle qu'en direction axiale,
en particulier de sorte que les premiers et/ou deuxièmes points de graisse (31, 32) sont étendus davantage en direction circonférentielle qu'en direction axiale.
